# EUROPEAN PATENT SPECIFICATION

(11) **EP 4 455 076 B1**
(45) Date of publication and mention of the grant of the patent: **11.02.2026**
(21) Application number: 23169857.2
(22) Date of filing: 25.04.2023
(51) Int. Cl.: C01B 3/16, C01B 3/36, C01B 3/38, C01B 3/56, C10G 3/00, C10G 45/02, C10G 49/00

(54) **DECARBONISATION OF A HYDROTREATMENT PLANT**
ENTKARBONISIERUNG EINER WASSERSTOFFBEHANDLUNGSANLAGE
DÉCARBONISATION D'UNE INSTALLATION D'HYDROTRAITEMENT

(43) Date of publication of application: 30.10.2024
(73) Proprietor: Johnson Matthey Davy Technologies Limited, London EC2V 7AD (GB)
(72) Inventor: ABBOTT, Jim, Billingham (GB); CASSIDY, Paul, London (GB); YORATH, Neil, London (GB)
(74) Representative: Johnson Matthey Plc

(56) References cited:
- WO-A1-2021/180805
- CN-B- 101 285 004
- CN-B- 107 557 075
- US-A1- 2009 298 957

## Description

### Technical field

The present invention relates to a method for reducing the carbon dioxide emissions of a hydrotreatment plant.

### Background art

Hydrotreating is a term used to refer to the catalytic treatment of a feedstock in the presence of hydrogen as part of processes to remove materials such as sulfur, nitrogen, olefins and aromatics. Hydrotreatment is often carried out on petroleum fractions as the first step of a wider refinery process. A review of hydrotreating is provided in Handbook of Petroleum Processing pp321-354 - Chapter 8 "Hydrotreating" by A. Gruia.

A hydrotreater is often a component of a refinery with hydrogen for the hydrotreater generated in a H₂ production unit elsewhere on the refinery. A hydrocarbon-containing by-product stream generated by the refinery is sometimes treated in a H₂ production unit to generate hydrogen for the hydrotreater.

WO2009/151690A2 describes a process involving treatment of a renewable feedstock by hydrogenating, deoxygenating, isomerizing and selectively hydrocracking the renewable feedstock in the presence of hydrogen and a catalyst to produce a reaction effluent. The reaction effluent is treated by separating the water, carbon oxides, light hydrocarbon gasses and hydrogen to generate a stream comprising paraffinic hydrocarbons, which is then separated into a hydrocarbon product comprising hydrocarbons having boiling points in the aviation fuel range, an overhead stream comprising naphtha, and a bottoms stream. In a preferred arrangement, certain components of the reaction effluent are separated and conducted to a steam reforming zone to produce hydrogen which is used in the hydrotreatment.

WO2021/180805A1 describes a process involving passing a feedstock originating from a renewable source through a hydroprocessing stage for producing a main hydrotreated stream. The main hydrotreated stream is separated into an aqueous stream, a hydrogen-rich stream and an off-gas stream comprising hydrocarbons. The hydrogen-rich stream is recycled to the hydroprocessing stage. The off-gas stream is passed to a hydrogen producing unit where it is used to produce a make-up hydrogen stream for the hydroprocessing stage.

While it is known to transfer off-gases from the hydrotreater to a steam reforming section to generate additional hydrogen for the hydrotreatment, these steam reforming sections typically contribute significantly to the CO₂ emissions of the refinery, as they are typically fuelled by burning a hydrocarbon fuel to provide the necessary heat for the steam reforming reactions taking place.

There is a need for an integrated process for producing hydrogen and carrying out hydrotreatment, with lower CO₂ emissions. The present invention addresses this need.

### Summary of the invention

In a first aspect the invention relates to a method for retrofitting a chemical plant according to claim 1. The method involves installing a tail-gas treatment unit comprising: an autothermal reformer (ATR) or a partial oxidation (POX) reactor; a second water-gas shift (WGS) section; and a first CO₂ removal unit. The term "second" used in connection with the "second water-gas shift section" and "first" used in connection with the "CO₂ removal unit" are simply to differentiate these sections and units from WGS sections and CO₂ removal units which may be present elsewhere, as will be explained in further sections.

The tail-gas treatment unit (TTU) is fed at least in part by the tail-gas stream produced by the hydrogen purification unit within the main reforming section and generates a crude H₂ product stream. At least a portion of the crude H₂ product stream is used as fuel in the fired reformer. A portion of the crude H₂ product stream may also be used as fuel for fired heaters to heat process streams elsewhere on the plant.

The TTU can be designed for any capacity within a wide range as long as it takes as feed, as a minimum, the tail-gas from the existing hydrogen plant. Furthermore, the constituent tail-gas treatment process units can be over-sized in design, in order to future-proof the tail-gas treatment unit for future expansions in H₂ production. By replacing or eliminating hydrocarbon fuel for firing the fired reformer by generating H₂ in the TTU, CO₂ emissions from the fired reformer are greatly reduced.

A benefit of introducing a TTU is that it does not require modification of the main reforming section, by which we mean the section formed by the fired reformer, first water-gas shift section, first water separation unit and hydrogen purification unit. The main reforming section may be operated uninterrupted right up until the change-over, when the tail-gas produced by the hydrogen purification unit is diverted to provide feed for the TTU. Furthermore, if there is limited space available adjacent to the existing hydrogen plant then the TTU can be cited remotely with pipelines running between the units.

Operation, post retrofit, is flexible and hydrogen plant operation need not be dependent on contemporaneous operation of the hydrotreater as the existing hydrogen plant can revert to its former mode of operation with natural gas fuel (with the tail-gas treatment unit still operating without any off-gas as feed) if economics and carbon dioxide emission constraints permit this on a temporary basis.

The method is particularly applicable to a scenario where the operator of a hydrotreatment facility wishes to change the feed from a non-biogenic feed (pre-retrofit) to a biogenic feed (post-retrofit). If the hydrotreater uses a biogenic fuel then combustion of off-gas from the hydrotreater as fuel in the SMR does not contribute to net CO₂ emissions. However, biogenic feeds typically require significantly more H₂ for hydrotreatment compared to non-biogenic fuels and therefore require the steam reforming section to operate with a higher throughput to produce the larger amounts of H₂ required for the hydrotreater. Installation of a TTU according to the present invention allows the necessary additional H₂ to be produced without increasing CO₂ emissions.

In a second aspect the invention relates to an integrated hydrogen and hydrotreatment plant according to claim 7. The plant may be produced by the retrofit method, or alternatively may be a grassroots plant.

In a third aspect the invention relates to an integrated process for producing hydrogen and carrying out hydrotreatment according to claim 8.

### Description of the Figures

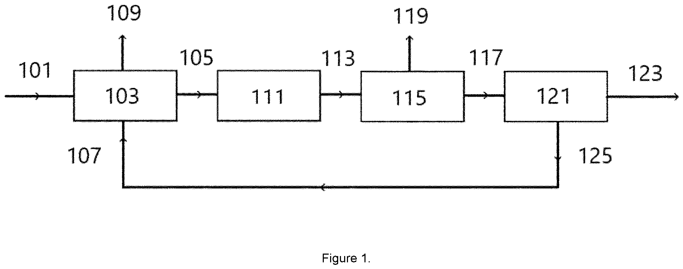

Figure 1 illustrates a H₂ plant without CO₂ abatement measures. A hydrocarbon feedstock stream (101) is fed to a fired reformer (103) to produce a first reformed gas stream (105). The fired reformer is heated by combusting a fuel stream (107) on a shell side of the fired reformer to produce a flue gas stream (109). The reformed gas stream is fed to a first water-gas shift section (111) to produce a first shifted gas stream (113). The shifted gas stream is cooled to condense water, which is separated in a first water separation unit (115) to produce a first dewatered shifted gas stream (117) and a first water condensate stream (119). The first dewatered shifted gas stream is fed to a hydrogen purification unit (121) to produce a H₂ product stream (123) and a tail-gas stream (125). In this example the fuel stream is provided entirely by the tail-gas stream.

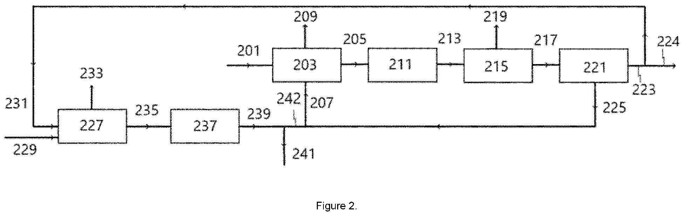

Figure 2 illustrates a H₂ plant integrated with a hydrotreating section (Example 1). The hydrotreating section (227) is fed by a hydrotreatment feedstock stream (229) and a hydrotreatment H₂ stream (231). The hydrotreating section produces a hydrotreatment product stream (233) and off-gas stream (235). The off-gas stream is fed to a desulfurization unit (237) to produce a desulfurized off-gas stream (239). A portion of the desulfurized off-gas stream (239) may be separated via stream (241) and a residual desulfurized off-gas stream (242). In this example the fuel stream (207) is provided by combining the residual desulfurized off-gas stream and the tail-gas stream (225). The H₂ product stream (223) is split into a hydrotreatment H₂ stream (231) and a second H₂ product stream (224).

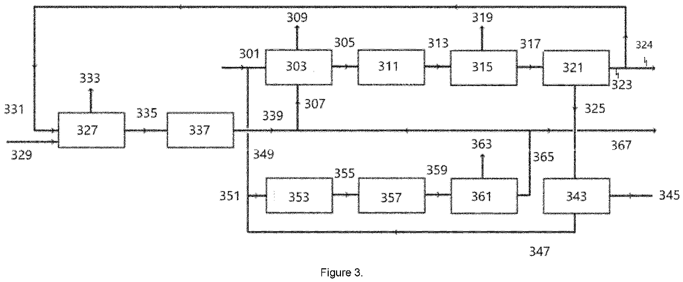

Figure 3 illustrates a H₂ plant integrated with a hydrotreating section (Example 2). This arrangement is based on the arrangement shown in Example 2. The tail-gas stream (325) is fed to a second carbon dioxide separation unit (343) to produce a second carbon dioxide-containing stream (345) and a purified tail-gas stream (347). The purified tail-gas stream is combined with a make-up hydrocarbon stream (349) to provide the tail-gas feedstock stream (351). The tail-gas feedstock stream is fed to an autothermal reformer (353) together with an oxygen-containing stream (not shown) to produce a second reformed gas stream (355). The second reformed gas stream is fed to a second water-gas shift section (357) to produce a second shifted gas stream (359). The second shifted gas stream, optionally having been dewatered, is fed to a first carbon dioxide separation unit (361) to produce a first carbon dioxide-containing stream (363) and a crude H₂ product stream (365). A portion of the crude H₂ product stream may be separated as a second H₂ stream (367).

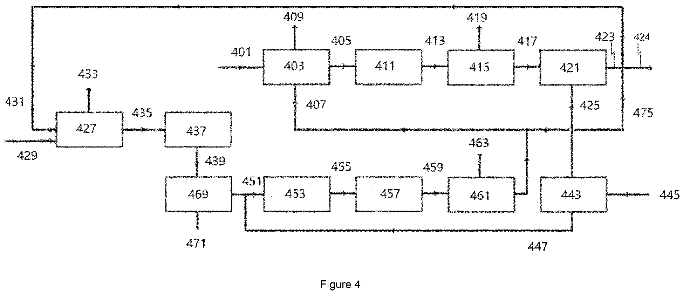

Figure 4 illustrates a H₂ plant integrated with a hydrotreating section (Example 3). This arrangement is based on the arrangement shown in Example 2. Instead of using the desulfurized off-gas stream (439) to produce the fuel stream (407), the desulfurized off-gas stream is first purified in a third carbon dioxide separation unit (469) to produce a third carbon dioxide-containing stream (471) and a purified off-gas stream (473). The purified off-gas stream and purified tail-gas stream (447) are combined to produce the tail-gas feedstock stream (451). A portion of the H₂ product stream (423) is separated via stream (475) and combined with the crude H₂ stream (465) to produce the fuel stream (407).

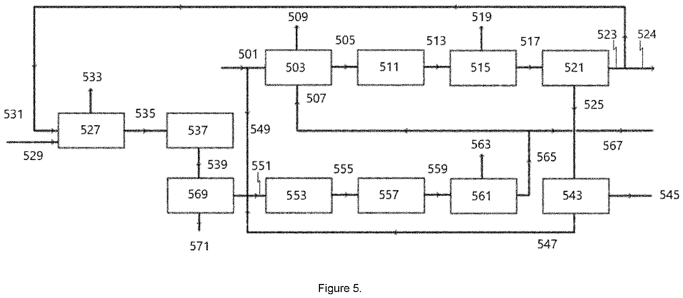

Figure 5 illustrates a H₂ plant integrated with a hydrotreating section (Example 4). This arrangement is based on the arrangement shown in Example 3. The tail-gas feedstock stream (551) is produced by combining the purified off-gas stream (573), the purified tail-gas stream (547) and make-up hydrocarbon stream (549). The crude H₂ stream (565) is produced in an amount which is in excess of what is required to provide the fuel duty for the fired reformer (503). The crude H₂ stream is split into a fuel stream (507) which is used in the fired reformer, and a second H₂ stream (567) which may be used for heating duty elsewhere on the plant.

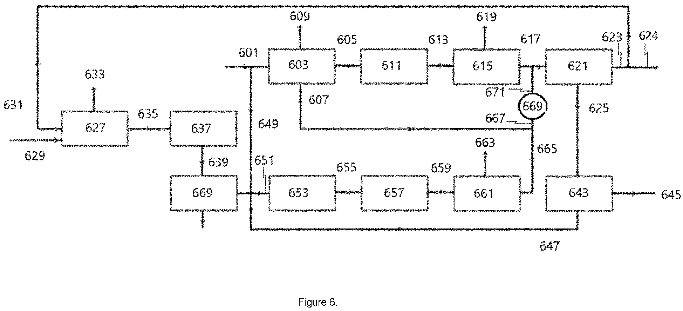

Figure 6 illustrates a H₂ plant integrated with a hydrotreatment section (Example 5). This arrangement is based on the arrangement shown in Example 4. Instead of using the second fuel stream (667) elsewhere on the plant, the second fuel stream is compressed in compressor (669) to produce a compressed second fuel stream (671) which is returned upstream of the hydrogen purification unit (621).

### Detailed description

Any sub-headings are for convenience only and are not intended to limit the invention.

Any aspect or embodiment described as being preferred in connection with the retrofit method also applies to the plant and method of the invention, and vice versa.

### Main reforming section

References herein to the "main reforming section" refer to the section comprising the fired reformer, first water-gas shift section, first water separation unit and hydrogen purification unit. It will be appreciated that intermediate stages of heating or cooling process streams may be present in between these stages. The role of the main reforming section is to generate a H₂ product stream (typically ≥ 99 vol% H₂). At least a portion of the H₂ product stream is used to provide the H₂ needed by the hydrotreating section. The hydrogen purification unit also produces a tail-gas stream which used to generate the tail-gas feedstock stream described below.

### Fired reformer

A fired reformer, also known as a steam methane reformer or SMR, typically comprises one or more tubes containing a steam reforming catalyst. The tubes are fed with a hydrocarbon feedstock stream which contains hydrocarbons (with methane being the predominant component) and steam. Heat for the endothermic steam reforming reactions taking place in the tubes ("tube side") is provided by combusting a fuel stream on the shell side of the reformer to produce a flue gas stream. In many existing hydrogen plants the fuel stream is predominantly hydrocarbon based and, unless the flue gas stream is treated to remove carbon dioxide, results in the emission of CO₂. The fired reformer produces a first reformed gas stream. Here "first" is used simply to differentiate from the second reformed gas stream produced in the TTU. In the present invention the fuel stream is provided at least in part by the crude H₂ stream.

### First water-gas shift section

The first reformed gas stream is typically cooled before being fed to the first WGS section. The first WGS section includes one or more WGS shift stages and may include stages of high-temperature shift, medium-temperature shift, isothermal shift and low-temperature shift. These terms, as well as suitable catalysts therefore, are described in WO2022/003312A1.

The stream exiting the WGS unit is referred to as a first shifted gas stream and ideally comprises CO₂, H₂, with the residual being steam, small amounts of unreacted methane and CO and inert gases.

### First water separation unit

The first shifted gas stream is cooled to a temperature below the dew point so that the steam condenses to water. Any suitable technique may be used and such techniques for water removal are described in WO2022/003312A1.

### Hydrogen purification unit

The role of the hydrogen purification is to separate the first dewatered shifted gas stream into a H₂ product stream and a tail-gas stream. Any suitable purification unit may be used, but a preferred unit is a pressure swing adsorption (PSA) unit. The H₂ product stream typically and preferably has a purity of ≥ 99 vol% H₂. At least a portion of the H₂ product stream is used to provide the H₂ needed by the hydrotreating section.

### Hydrotreating section

The role of the hydrotreating section is to carry out hydrotreatment on a hydrotreatment feedstock stream and produce a hydrotreated stream and an off-gas stream.

The hydrotreating section includes a hydrotreater and may also include additional units such as for dewaxing, isomerisation and hydrocracking. The H₂ for each of these additional units is preferably provided by a portion of the product H₂ stream. In addition to off-gases produced by the hydrotreater, off-gas streams may be produced from the additional units (including streams with low commercial value, such as those comprising C3-C5 hydrocarbons from a hydrocracker). These off-gas streams, optionally after having undergone treatment, may also be used to produce the tail-gas feedstock stream. Examples of treatment include purification to remove impurities such as sulfur compounds, or pre-reforming.

While the off-gas stream will have a lower sulfur content as compared to the hydrotreatment feedstock stream, in all embodiments of the invention it is preferred that the off-gas stream from the hydrotreater is first desulfurized to produce a desulfurized off-gas stream. Embodiments referring to the off-gas stream also apply to the desulfurized off-gas stream.

If the off-gas stream contains significant amounts of CO₂ then it may be desirable to treat the off-gas stream in a third carbon dioxide separation unit, upstream of the TTU, which is arranged to accept the off-gas stream and produce a third carbon dioxide-containing stream and a purified off-gas stream. Here, "third" is used to differentiate the carbon dioxide separation unit and the carbon dioxide-containing stream from the first and second carbon dioxide separation units and carbon dioxide-containing streams described in other sections. The purified off-gas stream may be used to produce the tail-gas feedstock stream. The retrofit method may therefore comprise installing a third carbon dioxide separation unit upstream of the TTU, the third carbon dioxide separation unit being arranged to accept the off-gas stream and produce a third carbon dioxide-containing stream and a purified off-gas stream. Removing carbon dioxide upstream of the TTU has the benefit of reducing the throughput through the TTU and may avoid having to oversize the TTU.

In a preferred embodiment the hydrotreatment feedstock stream is biogenic, i.e. it is derived from renewable sources rather than fossil fuel sources. If the hydrotreatment feedstock stream is biogenic then the off-gas may be used to provide the fuel gas without contribution to net CO₂ emissions.

### Tail-gas treatment unit

The TTU comprises, sequentially: an autothermal reformer (ATR) or partial oxidation reactor (POX), a second water-gas shift section, and a first carbon dioxide separation unit. Additional units (e.g. heat exchangers, steam removal etc...) may also be present in the TTU.

The feed to the ATR or POX is referred to herein as the tail-gas feedstock stream. The tail-gas feedstock stream includes at least a portion of the tail-gas stream from the hydrogen purification unit, preferably all of the tail-gas stream. In this way the fuel stream to the fired reformer makes use of the crude H₂ stream produced by the TTU rather than combusting the tail-gas stream, thereby lowering the CO₂ content of the flue gas stream produced by the fired reformer.

In some embodiments the tail-gas stream from the hydrogen purification unit may be used as the tail-gas feedstock stream directly, i.e. without altering its chemical composition. Because the tail-gas stream may still contain significant amounts of CO₂, in a preferred embodiment the tail-gas stream is treated in a second carbon dioxide separation unit upstream of the TTU to produce a second carbon dioxide-containing stream and a purified tail-gas stream. Here, "second" is used to differentiate the carbon dioxide separation unit and the carbon dioxide-containing stream from the first and third carbon dioxide separation units and carbon dioxide-containing streams described in other sections. The retrofit method may therefore comprise installing a second carbon dioxide separation unit upstream of the TTU, the third carbon dioxide separation unit being arranged to accept the tail-gas stream and produce a second carbon dioxide-containing stream and a purified tail-gas stream. Removing carbon dioxide upstream of the TTU has the benefit of reducing the throughput through the TTU and may avoid having to oversize the TTU.

In a preferred embodiment the tail-gas stream is supplemented with at least a portion of the off-gas stream from the hydrotreating section to produce the tail-gas feedstock stream. The retrofit method may therefore comprise installing means for feeding at least a portion of the off-gas stream to produce the tail-gas feedstock stream. In preferred embodiments all of the off-gas stream from the hydrotreating section is used to produce the tail-gas feedstock stream. Passing some, preferably all of the tail-gas stream through the TTU is desirable if the goal is to minimise the CO₂ content of the flue gas stream.

### Autothermal reformer (ATR) or partial oxidation (POX) reactor

The role of the ATR or POX is to convert hydrocarbons in the tail-gas feedstock stream into hydrogen and carbon oxides through steam reforming reactions. The steam content of the tail-gas feedstock steam may be adjusted by steam addition prior to entering the ATR or POX reactor.

The skilled person will be familiar with the design of autothermal reformers and detail of their arrangement and suitable catalysts are summarised in WO2022/003312A1. An ATR generally comprises a burner disposed at the top of the reformer, to which the hydrocarbon-containing fuel stream and an oxygen-containing gas are fed, a combustion zone beneath the burner through which a flame extends, and a fixed bed of particulate steam reforming catalyst disposed below the combustion zone. In autothermal reforming, the heat for the endothermic steam reforming reactions is therefore provided by combustion of a portion of hydrocarbon in the hydrocarbon-containing fuel stream. The hydrocarbon-containing fuel stream is typically fed to the top of the reformer and the oxygen-containing gas fed to the burner, mixing and combustion occur downstream of the burner generating a heated gas mixture the composition of which is brought to equilibrium as it passes through the steam reforming catalyst.

Partial oxidation reactors are known and typically comprise a vessel to which the feed and an oxygen-containing gas are fed via a burner, analogous to that used in an autothermal reformer, disposed above a reaction chamber in which the partial combustion reactions take place. Unlike an autothermal reformer, a catalyst is not present in the vessel. Air, oxygen-enriched air or O₂ may be used as the oxygen-containing gas. The combustion temperature may be about 1300°C, or higher. Steam may be added to the feed and/or the oxygen containing gas to lower the combustion temperature and reduce soot formation. The idealised formula for this reaction applied to methane in the feed is as follows:

2 CH₄ + O₂ → 2CO + 4 H₂

However, yields are below stoichiometric because part of the feed is fully combusted. It is therefore preferred that the TTU comprises an ATR.

The stream exiting the POX or ATR is referred to herein as a second reformed gas stream.

In one embodiment the TTU comprises a gas-heated reformer (GHR) in addition to the ATR or POX reactor. The skilled person will be familiar with the design of gas-heated reformers and detail of their arrangement and suitable catalysts are described for instance in WO2022/003312A1, GB1578270A, WO97/05947A1 and US4910228A. In general a GHR comprises one or more catalyst-filled tubes (defining a tube side), and is arranged so that hot gas passes over the outer surface of the tubes (a shell side) providing heat for the endothermic steam reforming reactions taking place tube side. In this arrangement hot gases from the outlet of the ATR or POX reactor are used as the hot gas on the shell-side of the GHR. The GHR and ATR or POX reactor can be arranged in any suitable arrangement, typically GHR followed by ATR or POX reactor with the hot gases then being sent to the GHR shell-side, although other arrangements are possible.

It is generally preferred that the TTU does not include any reforming stage other than the ATR or POX reactor.

### Second water-gas shift (WGS) section

The second reformed gas stream is typically cooled before being fed to the second WGS section. The second WGS section includes one or more WGS shift stages and may include stages of high-temperature shift, medium-temperature shift, isothermal shift and low-temperature shift. These terms, as well as suitable catalysts therefore, are described in WO2022/003312A1.

The stream exiting the WGS unit is referred to as a second shifted gas stream and ideally comprises CO₂, H₂, with the residual being small amounts of methane and CO and inert gases.

It is preferred that steam or water removal is carried out on the second shifted gas stream before it is sent to the first carbon dioxide separation unit. Typically the second shifted gas stream is cooled to a temperature below the dew point so that the steam condenses. Suitable techniques for water removal are described in WO2022/003312A1.

### First CO₂ removal unit

The role of the first CO₂ removal unit is to separate the second shifted gas stream into a first carbon dioxide-containing stream and a crude H₂ stream. Any suitable CO₂ separation technology may be used and the skilled person will be aware of suitable technologies. Examples include physical wash systems, reactive wash systems (e.g. an amine wash system) and cryogenic systems.

In some cases the carbon dioxide-containing stream produced by the first, second and/or third CO₂ removal units may be a relatively pure stream of CO₂ gas (e.g. where the CO₂ removal unit operates by cryogenic separation). However, "carbon dioxide-containing stream" should be understood in a broad sense. Preferred CO₂ removal units operate by means of a wash system, for example an amine wash, and produce a CO₂-laden adsorbent; the term "carbon dioxide-containing stream" should be understood to encompass such laden sorbent streams. The first, second and third carbon-dioxide containing streams may be processed separately to produce relatively pure carbon dioxide streams. Alternatively, one or more of these carbon-dioxide containing streams may be combined before being processed. Regenerated adsorbent is then returned to the CO₂ removal units.

### Use of the crude H₂ stream

The crude H₂ stream is used, at least in part, to provide the fuel stream for the fired reformer.

In some embodiments the TTU may produce the crude H₂ stream in an amount in excess of what is required to fuel the fired reformer. In this case the crude H₂ stream is split into a fuel stream, which is fed to the fired reformer, and a second H₂ stream. The second H₂ stream may be used for heating duty elsewhere on the plant, e.g. by being combusted in fired heaters to heat process streams elsewhere on the plant. If it is desired to maximise the amount of the H₂ product stream, then some or all of the second H₂ stream may be compressed and returned upstream of the hydrogen purification unit; typically downstream from the first water removal unit. The retrofit method may therefore comprise installing means to split the crude H₂ stream into a fuel stream which is fed to the fired reformer and a second H₂ stream, a compressor which is arranged to compress the second H₂ stream to produce a compressed second H₂ stream, and means for returning the compressed second H₂ steam upstream of the hydrogen purification unit.

In some embodiments the fuel stream is provided by the off-gas stream and the crude H₂ stream. This may be particularly acceptable when the hydrotreatment feedstock stream is biogenic and therefore combustion of the off-gas stream does not contribute to net CO₂ emissions.

In some embodiments the fuel stream is provided entirely by the crude H₂ stream. It will be appreciated that the amount of tail-gas feedstock stream fed to the TTU will need to be controlled in order to produce a sufficient amount of crude H₂ stream to fuel the fired reformer. This may be achieved by supplementing the tail-gas stream with one or more of the off-gas stream and/or a make-up hydrocarbon stream e.g. a natural gas stream.

### Examples

### Example 1 (not according to the invention)

A refinery has an SMR-based Hydrogen plant producing ~80kNm3/hr hydrogen. The existing hydrogen plant currently utilises 20,984 kgs/hr (1164.5 kgmols/hr) natural gas as feedstock and 3,466 kgs/hr (192.3 kgmols/hr) as fuel to the SMR (additional to PSA tail-gas fuel). This arrangement is shown in Figure 1. The total energy input is ~316MW LHV. Carbon dioxide is emitted to the atmosphere from the hydrogen plant at a rate of 64.7 tes/hr. The baseline Carbon intensity of the existing hydrogen plant with natural gas feed and fuel (scope 1 emissions) is therefore 9.06kgs CO₂/kg H₂.

The SMR-based hydrogen plant shown in Figure 1 is to be integrated with a renewable diesel (RND) hydrotreated processing a mix of vegetable oils, tallow and waste cooking oil to make 600,000 tes/yr RND (on stream factor 0.9) The approximate performance metrics of the new RND hydrotreater are as follows:
RND LHV ~44 MJ/kg
Feedstock oils fed at 1.207 kgs/kg RND
H₂ feed at 0.040 kgs/kg RND
Co-produced streams are available at low pressure - when aggregated these provide CO₂ at 0.045 kgs/kg RND, propane at 0.055 kgs/kg and hydrogen at 0.004 kgs/kg RND.

The contribution of the hydrogen usage to the carbon footprint of the renewable diesel product is ~0.04 x 9.06 ~ 0.4 kgs CO₂/kg diesel or ~ 9g CO₂/MJ LHV (second order scope 2 and scope 3 emissions for H₂ production will increase this slightly).

Figure 2 shows a block schematic of the new hydrotreater with the existing hydrogen plant. The hydrogen plant supplies hydrogen make-up (231) to the RNG hydrotreater, while off-gas is used on the existing hydrogen plant (242) , displacing all the natural gas fuel to the SMR (and leaving some off-gas fuel for use elsewhere on the refinery). Table 1 gives the stream flows and conditions.

It can be seen from the table that the net hydrogen export (stream 224) is ~46kNm3/hr, after providing a flow to the hydrotreater of ~33.8kNm3/hr.

The emission of CO₂ from the hydrogen plant is 65.3 tes/hr of which ~17% is biogenic, ie emissions of fossil-based CO₂ is ~54 tes/hr. Compared to the hydrogen plant before the change this is a small reduction of 10.7 tes/hr (~17%).

The Carbon intensity of the hydrogen plant (scope 1 emissions) is therefore 7.58kgs CO₂/kg H₂ (a reduction of ~1.5kgs CO₂/kg H₂ over the base-line). The reduction of the carbon footprint of the renewable diesel product is ~0.04 x 1.5 ~ 0.06kgs CO₂/kg diesel or ~ 1g CO₂/MJ LHV.

### Example 2

Figure 3 shows a block schematic of the new hydrotreater and the hydrogen plant revamped with a tail-gas treatment Unit (TTU). In this example there is no integration between the RND hydrotreater and the SMR/TTU units. The tail-gas feed is passed through a CO2 absorber to capture the CO2 content before being fed to the TTU autothermal reformer. The off-gas continues to be used as fuel in the Hydrogen plant SMR with the rest of the fuel being H₂ product from the TTU. The SMR hydrogen plant supplies hydrogen make-up to the RNG hydrotreater. Table 2 gives the stream flows and conditions.

It can be seen from the table that the net hydrogen export (streams 367 and 324) is still ~65kNm3/hr, after providing a flow to the hydrotreater of ~33.8kNm3/hr. The total produced hydrogen from the revamped hydrogen plant is 98.6kNm3/hr, an increase of ~23% over the pre-retrofit rate.

The emission of CO₂ from the revamped plant is 16.4 tes/hr of which 97% is biogenic, ie emissions of fossil-based CO₂ is ~0.5 tes/hr. Compared to the hydrogen plant before its revamp this is a huge reduction of ~64.2 tes/hr (99.2%).

The Carbon intensity of the hydrogen plant (scope 1 emissions) is therefore 0.57kgs CO₂/kg H₂ (a reduction of ~8.5kgs CO₂/kg H₂ over the base-line). The reduction of the carbon footprint of the renewable diesel product is ~0.04 x 8.5 ~ 0.34kgs CO₂/kg diesel or ~ 8g CO₂/MJ LHV.

### Example 3

Figure 4 shows an example of a conversion of the existing SMR Hydrogen plant with a TTU and integration according to the invention with the RND hydrotreater. This example is configured for minimum natural gas input and maximum reduction of H₂ product carbon intensity. The flows are as per Example 2 except that:
i) The only natural gas feed is to the SMR.
ii) Instead of routing off-gas to SMR fuel, it is fed to the TTU. It passes first to a CO₂ separation column; the decarbonised off-gas is fed together with decarbonised tail-gas to an oxygen-fired ATR in the TTU.
iii) All the TTU product is used as fuel in the SMR with a small balancing flow taken from the hydrogen produced by the SMR unit.

Table 3 details key flows and conditions.

It can be seen from the table that the net hydrogen export (stream 424) is ~44kNm3/hr, after providing a flow to the hydrotreater of ~33.8kNm3/hr. The total produced hydrogen from the revamped hydrogen plant is 77.8kNm3/hr, about 97% of the pre-retrofit rate.

The emission of CO₂ from the revamped plant is ~1.0 tes/hr of which 40% is biogenic, ie emissions of fossil-based CO₂ is ~0.6 tes/hr. Compared to the hydrogen plant before its revamp this is a reduction of ~64.2 tes/hr (99%). There is also biogenic carbon capture of ~15.9 tes/hr

The Carbon intensity of the hydrogen plant (scope 1 emissions) is therefore ~ -2.2kgs CO₂/kg H₂ (a reduction of ~11.3kgs CO₂/kg H₂ over the base-line). The reduction of the carbon footprint of the renewable diesel product is ~0.04 x 11.3 ~ 0.45kgs CO₂/kg diesel or ~ 10g CO₂/MJ LHV

### Example 4

Example 4 (Figure 5) has a similar configuration to Example 3 (Figure 4) Except that the TTU capacity is increased by feeding natural gas to it (as well as tail-gas and off-gas) in order to restore the export hydrogen capacity (net of hydrogen feed to the RND hydrotreater) to 80kNm3/hr.

Now H₂ product from the TTU solely supplies the SMR reformer fuel duty. Both the tail-gas feed and off-gas feed are passed through absorbers to capture their CO₂ content before being fed together with natural gas to the TTU autothermal reformer. Table 4 details key flows and conditions:
It can be seen from the table that the net hydrogen export (streams 567+524) is ~80kNm3/hr, after providing a flow to the hydrotreater of ~33.8kNm3/hr. The total produced hydrogen from the revamped hydrogen plant is 113.6kNm3/hr, about 142% of the pre-retrofit rate.

The emission of CO₂ from the revamped plant is ~1.3 tes/hr of which 20% is biogenic, ie emissions of fossil-based CO₂ is ~1.1 tes/hr. Compared to the hydrogen plant before its revamp this is a reduction of ~63.6 tes/hr (98.3%). There is also biogenic carbon capture of ~15.9 tes/hr

The Carbon intensity of the hydrogen plant (scope 1 emissions) is therefore ~ -1.5kgs CO₂/kg H₂ (a reduction of ~10.6kgs CO₂/kg H₂ over the base-line). The reduction of the carbon footprint of the renewable diesel product is ~0.04 x 10.6 ~ 0.42kgs CO₂/kg diesel or ~ 10g CO₂/MJ LHV.

### Example 5

The arrangement of Example 4 (Figure 5) produces two hydrogen export streams; one of high purity (steam 524) and one of fuel quality (stream 567). Example 5 has a similar configuration to Example 4 except that the fuel quality stream is compressed and routed to the PSA unit on the existing Hydrogen plant, so that the full 80kNm3/hr hydrogen export from the PSA (net of feed to RND hydrotreater) is of 99.9% quality. Table 5 details key flows and conditions.

This requires a modest increase in impurities adsorbed in the PSA (about 5%). The total produced hydrogen from the revamped hydrogen plant is 113.6kNm3/hr, about 142% of the pre-retrofit rate.

The emission of CO₂ from the revamped plant is ~1.3 tes/hr of which 20% is biogenic, ie emissions of fossil-based CO₂ is ~1.1 tes/hr. Compared to the hydrogen plant before its revamp this is a reduction of ~63.6 tes/hr (98.3%). There is also biogenic carbon capture of ~15.9 tes/hr

The Carbon intensity of the hydrogen plant (scope 1 emissions) is therefore ~ -1.5kgs CO₂/kg H₂ (a reduction of ~10.6kgs CO₂/kg H₂ over the base-line). The reduction of the carbon footprint of the renewable diesel product is ~0.04 x 10.6 ~ 0.42kgs CO₂/kg diesel or ~ 10g CO₂/MJ LHV.

**Table 1.**

| Stream | **201** | **209** | **223** | **224** | **225** | **229** | **231** | **233** | **239** | **241** | **242** |
|---|---|---|---|---|---|---|---|---|---|---|---|
| Temperature (°C) | 40.0 | 175 | 40.0 | 40.0 | 33.0 | | 40.0 | | 40.0 | 40.0 | 40.0 |
| Pressure (bara) | 42.0 | 0.02 | 25.0 | 25.0 | 1.30 | | 40.0 | | 1.30 | 1.30 | 1.30 |
| Mass flow (kg/h) | 20985 | 202684 | 7139 | 4126 | 48528 | 91891 | 3013 | 76103 | 7880 | 2301 | 5579 |
| Molar flow (kgmol/hr) | 1164 | 6856 | 3569 | 2062 | 1685 | | 1507 | | 314 | 92 | 222 |
| Component (mol%) | | | | | | | | | | | |
| H₂O | | 17.0 | | | 0.75 | | | | | | |
| H₂ | | | 100 | 100 | 23.7 | | 100 | | 45.2 | 45.2 | 45.2 |
| CO | | | | | 14.5 | | | | | | |
| CO₂ | 2.00 | 21.7 | | | 50.9 | | 24.8 | | 24.8 | | 24.8 |
| N₂ | 0.90 | 59.5 | | | 0.62 | | | | | | |
| Ar | | 0.76 | | | | | | | | | |
| CH₄ | 89.0 | | | | 9.45 | | | | | | |
| C₂H₆ | 7.00 | | | | | | | | | | |
| C₃H₈ | 1.00 | | | | | | | | 30.0 | 30.0 | 30.0 |
| C₄H₁₀ | 0.10 | | | | | | | | | | |
| O₂ | | 1.05 | | | | | | | | | |

**Table 2.**

| Stream | **301** | **309** | **323** | **324** | **325** | **329** | **331** | **333** | **339** | **347** | **349** | **363** | **365** | **367** |
|---|---|---|---|---|---|---|---|---|---|---|---|---|---|---|
| Temperature (°C) | 40.0 | 175 | 40.0 | 40.0 | 33.0 | | 40.0 | | 40.0 | 40.0 | 40.0 | 30.0 | 40.0 | 40.0 |
| Pressure (bara) | 42.0 | 0.02 | 25.0 | 25.0 | 1.30 | | 40.0 | | 1.30 | 30.1 | 42.0 | 36.0 | 10.0 | 20.0 |
| Mass flow (kg/h) | 20985 | 157162 | 7139 | 4126 | 48528 | 91891 | 3013 | 76103 | 7880 | 10720 | 5166 | 68280 | 5309 | 2517 |
| Molar flow (kgmol/hr) | 1164 | 5985 | 3569 | 2062 | 1685 | | 1507 | 314 | | 818 | 286 | 1557 | 1811 | 859 |
| Component (mol%) | | | | | | | | | | | | | | |
| H₂O | | 24.2 | | | 0.75 | | | | | 0.30 | | | 0.38 | 0.38 |
| H₂ | | | 99.9 | 99.9 | 23.7 | | 99.9 | | 45.2 | 48.7 | | 0.34 | 96.7 | 96.7 |
| CO | | | | | 14.5 | | | | | 29.9 | | 0.04 | 0.76 | 0.76 |
| CO₂ | 2.00 | 6.24 | | | 50.9 | | | | 24.8 | 0.52 | 2.00 | 99.4 | 0.19 | 0.19 |
| N₂ | 0.89 | 67.4 | | | 0.62 | | | | | 1.27 | 0.89 | | 0.89 | 0.89 |
| Ar | | 0.99 | | | | | | | | | | | 0.81 | 0.81 |
| CH₄ | 89.0 | | | | 9.45 | | | | | 19.4 | 89.0 | 0.06 | 0.25 | 0.25 |
| C₂H₆ | 7.00 | | | | | | | | | | 7.00 | | | |
| C₃H₈ | 1.00 | | | | | | | | 30.0 | | 1.00 | | | |
| C₄H₁₀ | 0.10 | | | | | | | | | | 0.10 | | | |
| O₂ | | 1.18 | | | | | | | | | | | | |

**Table 3.**

| Stream | **401** | **409** | **423** | **424** | **425** | **429** | **431** | **433** | **451** | **463** | **475** |
|---|---|---|---|---|---|---|---|---|---|---|---|
| Temperature (°C) | 40.0 | 175 | 40.0 | 40.0 | 33.0 | | 40.0 | | 40.0 | 30.0 | 40.0 |
| Pressure (bara) | 42.0 | 0.02 | 25.0 | 25.0 | 1.30 | | 40.0 | | 30.1 | 36.0 | 1.30 |
| Mass flow (kg/h) | 20985 | 138368 | 7139 | 3927 | 48528 | 91891 | 3013 | 76103 | 10720 | 70468 | 199 |
| Molar flow (kgmol/hr) | 1164 | 5681 | 3569 | 1962 | 1685 | | 1507 | | 818 | 1607 | 99.9 |
| Component (mol%) | | | | | | | | | | | |
| H₂O | | 32.3 | | | 0.75 | | | | 0.30 | | |
| H₂ | | | 99.9 | 99.9 | 23.7 | | 99.9 | | 48.7 | 0.34 | 99.9 |
| CO | | | | | 14.5 | | | | 29.9 | 0.04 | |
| CO₂ | 2.00 | 0.38 | | | 50.9 | | | | 0.52 | 99.5 | |
| N₂ | 0.89 | 65.1 | | | 0.62 | | | | 1.27 | | |
| Ar | | 1.06 | | | | | | | | | |
| CH₄ | 89.0 | | | | 9.45 | | | | 19.36 | 0.03 | |
| C₂H₆ | 7.00 | | | | | | | | | | |
| C₃H₈ | 1.00 | | | | | | | | | | |
| C₄H₁₀ | 0.10 | | | | | | | | | | |
| O₂ | | | | | | | | | | | |

**Table 4.**

| Stream | **501** | **507** | **509** | **523** | **524** | **525** | **529** | **531** | **533** | **547** | **549** | **563** | **565** | **567** |
|---|---|---|---|---|---|---|---|---|---|---|---|---|---|---|
| Temperature (°C) | 40.0 | 40.0 | 175 | 40.0 | 40.0 | 33.0 | | 40.0 | | 40.0 | 40.0 | 30.0 | 40.0 | 40.0 |
| Pressure (bara) | 42.0 | 1.30 | 0.02 | 25.0 | 25.0 | 1.30 | | 40.0 | | 30.1 | 42.0 | 36.0 | 20.0 | 20.0 |
| Mass flow (kg/h) | 20985 | 5393 | 140085 | 7139 | 4126 | 48528 | 91891 | 3013 | 76103 | 10720 | 10869 | 98468 | 9768 | 4375 |
| Molar flow (kgmol/hr) | 1164 | 1903 | 5753 | 3569 | 2062 | 1685 | | 1507 | | 818 | 603 | 2246 | 3446 | 1543 |
| Component (mol%) | | | | | | | | | | | | | | |
| H₂O | | 0.38 | 32.4 | | | 0.75 | | | | 0.30 | | | 0.38 | 0.38 |
| H₂ | | 97.2 | | 99.9 | 99.9 | 23.7 | | 99.9 | | 48.7 | | 0.34 | 97.2 | 97.2 |
| CO | | 0.51 | | | | 14.5 | | | | 29.9 | | 0.04 | 0.51 | 0.51 |
| CO₂ | 2.00 | 0.19 | 0.34 | | | 50.9 | | | | 0.52 | 2.00 | 99.54 | 0.19 | 0.19 |
| N₂ | 0.89 | 0.66 | 65.0 | | | 0.62 | | | | 1.27 | 0.89 | | 0.66 | 0.66 |
| Ar | | 0.92 | 1.13 | | | | | | | | | | 0.92 | 0.92 |
| CH₄ | 89.0 | 0.18 | | | | 9.45 | | | | 19.4 | 89.0 | 0.03 | 0.18 | 0.18 |
| C₂H₆ | 7.00 | | | | | | | | | | 7.00 | | | |
| C₃H₈ | 1.00 | | | | | | | | | | 1.00 | | | |
| C₄H₁₀ | 0.10 | | | | | | | | | | 0.10 | | | |
| O₂ | | | 1.14 | | | | | | | | | | | |

**Table 5.**

| Stream | **601** | **607** | **609** | **623** | **624** | **625** | **629** | **631** | **633** | **647** | **649** | **663** | **665** | **671** |
|---|---|---|---|---|---|---|---|---|---|---|---|---|---|---|
| Temperature (°C) | 40.0 | 40.0 | 175 | 40.0 | 40.0 | 33.0 | | 40.0 | | 40.0 | 40.0 | 30.0 | 40.0 | 40.0 |
| Pressure (bara) | 42.0 | 1.30 | 0.02 | 25.0 | 25.0 | 1.30 | | 40.0 | | 30.1 | 42.0 | 36.0 | 20.0 | 26.0 |
| Mass flow (kg/h) | 20985 | 6245 | 141956 | 10137 | 7124 | 51135 | 91891 | 3013 | 76103 | 13064 | 10901 | 99143 | 11876 | 5631 |
| Molar flow (kgmol/hr) | 1164 | 1927 | 5807 | 5068 | 3561 | 1922 | | 1507 | | 1045 | 605 | 2261 | 3666 | 1739 |
| Component (mol%) | | | | | | | | | | | | | | |
| H₂O | | 0.36 | 32.1 | | | 0.99 | | | | 0.29 | | | 0.36 | 0.36 |
| H₂ | | 95.9 | | 99.9 | 99.9 | 29.4 | | 99.9 | | 54.0 | | 0.34 | 95.6 | 95.9 |
| CO | | 0.50 | | | | 13.2 | | | | 24.2 | | 0.04 | 0.50 | 0.50 |
| CO₂ | 2.00 | 0.18 | 0.51 | | | 44.8 | | | | 0.41 | 2.00 | 99.5 | 0.18 | 0.18 |
| N₂ | 0.89 | 1.17 | 64.9 | | | 1.60 | | | | 2.93 | 0.89 | | 1.17 | 1.17 |
| Ar | | 1.65 | 1.37 | | | 1.49 | | | | 2.72 | | | 1.65 | 1.65 |
| CH₄ | 89.0 | 0.18 | | | | 8.45 | | | | 15.4 | 89.0 | 0.03 | 0.18 | 0.18 |
| C₂H₆ | 7.00 | | | | | | | | | | 7.00 | | | |
| C₃H₈ | 1.00 | | | | | | | | | | 1.00 | | | |
| C₄H₁₀ | 0.10 | | | | | | | | | | 0.10 | | | |
| O₂ | | | 1.14 | | | | | | | | | | | |

## Claims

1. A method for retrofitting a chemical plant which initially comprises:
(a) a hydrotreating section which is arranged to accept a hydrotreatment feedstock stream and produce a hydrotreated stream and an off-gas stream;
(b) a steam reforming section comprising:
(b-i) a fired reformer which is arranged to accept a hydrocarbon feedstock stream and produce a first reformed gas stream, the fired reformer heated by combusting a fuel stream on a shell side of the fired reformer to produce a flue gas stream;
(b-ii) a first water-gas shift section which is arranged to accept the first reformed gas stream and produce a first shifted gas stream;
(b-iii) a first water separation unit which is arranged to accept the first shifted gas stream and produce a first dewatered shifted gas stream and a first water stream;
(b-iv) a hydrogen purification unit which is arranged to accept the first dewatered shifted gas stream and produce a H₂ product stream and a tail-gas stream;
the method comprising the step of installing:
(c) a tail-gas treatment unit comprising:
(c-i) an autothermal reformer or a partial oxidation reactor which is arranged to accept a tail-gas feedstock stream comprising at least part of the tail-gas stream and produce a second reformed gas stream
(c-ii) a second water-gas shift section which is arranged to accept the second reformed gas stream and produce a second shifted gas stream;
(c-iii) a first carbon dioxide separation unit which is arranged to accept the second shifted gas stream and produce a crude H₂ stream and a first carbon dioxide-containing stream;
wherein the tail-gas treatment unit is arranged to be fed at least in part with the tail-gas stream; and
wherein the fuel stream is provided at least in part by the crude H₂ stream.

2. A retrofit method according to claim 1, wherein the method comprises installing a second carbon dioxide separation unit upstream of the tail-gas treatment unit which is arranged to accept the tail-gas stream and produce a second carbon dioxide-containing stream and a purified tail-gas stream.

3. A retrofit method according to claim 1 or claim 2, wherein the method comprises installing means for feeding at least a portion of the off-gas stream to produce the tail-gas feedstock stream.

4. A retrofit method according to any of claims 1 to 3, wherein the method comprises installing a third carbon dioxide separation unit upstream of the tail-gas treatment unit which is arranged to accept the off-gas stream and produce a third carbon dioxide-containing stream and a purified off-gas stream.

5. A retrofit method according to any of claims 1 to 4, wherein the method comprises installing means to split the crude H₂ stream into a fuel stream which is fed to the fired reformer and a second H₂ stream, a compressor which is arranged to compress the second H₂ stream to produce a compressed crude H₂ stream and means for returning the compressed crude H₂ steam upstream of the hydrogen purification unit.

6. A retrofit method according to claim 5, wherein the method comprises installing means for heating one or more process streams in one or more fired heaters by combusting at least a portion of the crude H₂ stream.

7. An integrated hydrogen and hydrotreatment plant comprising:
(a) a hydrotreating section which is arranged to accept a hydrotreatment feedstock stream and produce a hydrotreated stream and an off-gas stream;
(b) a steam reforming section comprising:
(b-i) a fired reformer which is arranged to accept a hydrocarbon feedstock stream and produce a first reformed gas stream, the fired reformer heated by combusting a fuel stream on a shell side of the fired reformer to produce a flue gas stream;
(b-ii) a first water-gas shift section which is arranged to accept the first reformed gas stream and produce a first shifted gas stream;
(b-iii) a first water separation unit which is arranged to accept the first shifted gas stream and produce a first dewatered shifted gas stream and a first water stream;
(b-iv) a hydrogen purification unit which is arranged to accept the first dewatered shifted gas stream and produce a H₂ product stream and a tail-gas stream;
(c) a tail-gas treatment unit comprising:
(c-i) an autothermal reformer or a partial oxidation reactor which is arranged to accept a tail-gas feedstock stream comprising at least part of the tail-gas stream and produce a second reformed gas stream
(c-ii) a second water-gas shift section which is arranged to accept the second reformed gas stream and produce a second shifted gas stream;
(c-iii) a carbon dioxide separation unit which is arranged to accept the second shifted gas stream and produce a crude H₂ stream and a first carbon dioxide-containing stream;
wherein the tail-gas treatment unit is arranged to be fed at least in part with the tail-gas stream; and
wherein the fuel stream is provided at least in part by the crude H₂ stream.

8. An integrated process for producing hydrogen and carrying out hydrotreatment, comprising the steps of:
(a) carrying out hydrotreatment of a hydrotreatment feedstock stream in a hydrotreating section to produce a hydrotreated stream and an off-gas stream;
(b) carrying out steam reforming in a steam reforming section comprising:
(b-i) a fired reformer which is arranged to accept a hydrocarbon feedstock stream and produce a first reformed gas stream, the fired reformer heated by combusting a fuel stream on a shell side of the fired reformer to produce a flue gas stream;
(b-ii) a first water-gas shift section which is arranged to accept the first reformed gas stream and produce a first shifted gas stream;
(b-iii) a first water separation unit which is arranged to accept the first shifted gas stream and produce a dewatered shifted gas stream and a first water stream;
(b-iv) a hydrogen purification unit which is arranged to accept the first dewatered shifted gas stream and produce a H₂ product stream and a tail-gas stream;
(c) feeding a tail-gas feedstock stream comprising at least part of the tail-gas stream to a tail-gas treatment unit comprising:
(c-i) an autothermal reformer or a partial oxidation reactor which is arranged to accept the tail-gas feedstock stream and produce a second reformed gas stream;
(c-ii) a second water-gas shift section which is arranged to accept the second reformed gas stream and produce a second shifted gas stream;
(c-iii) a carbon dioxide separation unit which is arranged to accept the second shifted gas stream and produce a crude H₂ stream and a first carbon dioxide-containing stream;
wherein the fuel stream is provided at least in part by the crude H₂ stream;
wherein the H₂ product stream provides the H₂ for the hydrotreatment.

9. A process according to claim 8, wherein the fuel stream is provided entirely by the crude H₂ stream.

10. A process according to claim 8, wherein the fuel stream is provided by the off-gas stream and the crude H₂ stream.

11. A process according to any of claims 8 to 10, wherein the tail-gas feedstock stream is provided by the tail-gas stream and a make-up hydrocarbon stream.

12. A process according to any of claims 8 to 10, wherein the tail-gas feedstock stream is provided by the tail-gas stream and the off-gas stream.

13. A process according to any of claims 8 to 10, wherein the tail-gas feedstock stream is provided by the tail-gas stream, the off-gas stream, and a make-up hydrocarbon stream.

14. A process according to any of claims 8 to 13, wherein a portion of the crude H₂ product stream is used as fuel for fired heaters to heat process streams elsewhere on the plant.

15. A process according to any of claims 8 to 14, wherein the hydrotreatment feedstock stream is biogenic.

## Patentansprüche

1. Verfahren zum Nachrüsten einer Chemieanlage, die anfänglich umfasst:
(a) einen Hydrotreating-Abschnitt, der angeordnet ist, um einen Hydrobehandlungs-Ausgangsmaterialstrom aufzunehmen und einen hydrobehandelten Strom und einen Abgasstrom zu produzieren;
(b) einen Dampfreformierungsabschnitt, umfassend:
(b-i) einen befeuerten Reformer, der angeordnet ist, um einen Kohlenwasserstoff-Ausgangsmaterialstrom aufzunehmen und einen ersten reformierten Gasstrom zu produzieren, wobei der befeuerte Reformer durch Verbrennen eines Brennstoffstroms auf einer Mantelseite des befeuerten Reformers erhitzt wird, um einen Rauchgasstrom zu produzieren;
(b-ii) einen ersten Wasser-Gas-Konvertierungsabschnitt, der angeordnet ist, um den ersten reformierten Gasstrom aufzunehmen und einen ersten konvertierten Gasstrom zu produzieren;
(b-iii) eine erste Wassertrenneinheit, die angeordnet ist, um den ersten konvertierten Gasstrom aufzunehmen und einen ersten entwässerten konvertierten Gasstrom und einen ersten Wasserstrom zu produzieren;
(b-iv) eine Wasserstoffreinigungseinheit, die angeordnet ist, um den ersten entwässerten konvertierten Gasstrom aufzunehmen und einen H₂-Produktstrom und einen Endgasstrom zu produzieren;
das Verfahren umfassend den Schritt eines Einbauens:
(c) einer Endgasbehandlungseinheit, umfassend:
(c-i) einen autothermen Reformer oder einen Partialoxidationsreaktor, der angeordnet ist, um einen Endgas-Ausgangsmaterialstrom, umfassend mindestens einen Teil des Endgasstroms, aufzunehmen und einen zweiten reformierten Gasstrom zu produzieren
(c-ii) einen zweiten Wasser-Gas-Konvertierungsabschnitt, der angeordnet ist, um den zweiten reformierten Gasstrom aufzunehmen und einen zweiten konvertierten Gasstrom zu produzieren;
(c-iii) eine erste Kohlendioxidtrenneinheit, die angeordnet ist, um den zweiten konvertierten Gasstrom aufzunehmen und einen rohen H₂-Strom und einem ersten kohlendioxidhaltigen Strom zu produzieren;
wobei die Endgasbehandlungseinheit angeordnet ist, um mindestens teilweise mit dem Endgasstrom gespeist zu werden; und
wobei der Brennstoffstrom mindestens teilweise durch den rohen H₂-Strom bereitgestellt wird.

2. Nachrüstverfahren nach Anspruch 1, wobei das Verfahren das Einbauen einer zweiten Kohlendioxidtrenneinheit stromaufwärts der Endgasbehandlungseinheit, die angeordnet ist, um den Endgasstrom aufzunehmen und einen zweiten kohlendioxidhaltigen Strom und einen gereinigten Endgasstrom zu produzieren, umfasst.

3. Nachrüstverfahren nach Anspruch 1 oder 2, wobei das Verfahren Einbaumittel zum Zuführen mindestens eines Anteils des Abgasstroms umfasst, um den Endgas-Ausgangsmaterialstrom zu produzieren.

4. Nachrüstverfahren nach einem der Ansprüche 1 bis 3, wobei das Verfahren das Einbauen einer dritten Kohlendioxidtrenneinheit stromaufwärts der Endgasbehandlungseinheit, die angeordnet ist, um den Abgasstrom aufzunehmen und einen dritten kohlendioxidhaltigen Strom und einen gereinigten Abgasstrom zu produzieren, umfasst.

5. Nachrüstverfahren nach einem der Ansprüche 1 bis 4, wobei das Verfahren Einbaumittel, um den rohen H₂-Strom in einen Brennstoffstrom, der dem befeuerten Reformer zugeführt wird, und einen zweiten H₂-Strom aufzuteilen, einen Verdichter, der angeordnet ist, um den zweiten H₂-Strom zu verdichten, um einen verdichteten rohen H₂-Strom zu produzieren, und Mittel zum Rückführen des verdichteten rohen H₂-Dampfs stromaufwärts der Wasserstoffreinigungseinheit, umfasst.

6. Nachrüstverfahren nach Anspruch 5, wobei das Verfahren Einbaumittel zum Erhitzen eines oder mehrerer Prozessströme in einer oder mehreren befeuerten Heizvorrichtungen durch Verbrennen mindestens eines Anteils des rohen H₂-Stroms umfasst.

7. Integrierte Wasserstoff- und Hydrobehandlungs-Anlage, umfassend:
(a) einen Hydrotreating-Abschnitt, der angeordnet ist, um einen Hydrobehandlungs-Ausgangsmaterialstrom aufzunehmen und einen hydrobehandelten Strom und einen Abgasstrom zu produzieren;
(b) einen Dampfreformierungsabschnitt, umfassend:
(b-i) einen befeuerten Reformer, der angeordnet ist, um einen Kohlenwasserstoff-Ausgangsmaterialstrom aufzunehmen und einen ersten reformierten Gasstrom zu produzieren, wobei der befeuerte Reformer durch Verbrennen eines Brennstoffstroms auf einer Mantelseite des befeuerten Reformers erhitzt wird, um einen Rauchgasstrom zu produzieren;
(b-ii) einen ersten Wasser-Gas-Konvertierungsabschnitt, der angeordnet ist, um den ersten reformierten Gasstrom aufzunehmen und einen ersten konvertierten Gasstrom zu produzieren;
(b-iii) eine erste Wassertrenneinheit, die angeordnet ist, um den ersten konvertierten Gasstrom aufzunehmen und einen ersten entwässerten konvertierten Gasstrom und einen ersten Wasserstrom zu produzieren;
(b-iv) eine Wasserstoffreinigungseinheit, die angeordnet ist, um den ersten entwässerten konvertierten Gasstrom aufzunehmen und einen H₂-Produktstrom und einen Endgasstrom zu produzieren;
(c) eine Endgasbehandlungseinheit, umfassend:
(c-i) einen autothermen Reformer oder einen Partialoxidationsreaktor, der angeordnet ist, um einen Endgas-Ausgangsmaterialstrom, umfassend mindestens einen Teil des Endgasstroms, aufzunehmen und einen zweiten reformierten Gasstrom zu produzieren
(c-ii) einen zweiten Wasser-Gas-Konvertierungsabschnitt, der angeordnet ist, um den zweiten reformierten Gasstrom aufzunehmen und einen zweiten konvertierten Gasstrom zu produzieren;
(c-iii) eine Kohlendioxidtrenneinheit, die angeordnet ist, um den zweiten konvertierten Gasstrom aufzunehmen und einen rohen H₂-Strom und einem ersten kohlendioxidhaltigen Strom zu produzieren;
wobei die Endgasbehandlungseinheit angeordnet ist, um mindestens teilweise mit dem Endgasstrom gespeist zu werden; und
wobei der Brennstoffstrom mindestens teilweise durch den rohen H₂-Strom bereitgestellt wird.

8. Integrierter Prozess zum Produzieren von Wasserstoff und zum Ausführen einer Hydrobehandlung, umfassend die Schritte:
(a) Ausführen von Hydrobehandlung eines Hydrobehandlungsausgangsmaterialstroms in einem Hydrotreating-Abschnitt, um einen hydrobehandelten Strom und einen Abgasstrom zu produzieren;
(b) Ausführen von Dampfreformierung in einem Dampfreformierungsabschnitt, umfassend:
(b-i) einen befeuerten Reformer, der angeordnet ist, um einen Kohlenwasserstoff-Ausgangsmaterialstrom aufzunehmen und einen ersten reformierten Gasstrom zu produzieren, wobei der befeuerte Reformer durch Verbrennen eines Brennstoffstroms auf einer Mantelseite des befeuerten Reformers erhitzt wird, um einen Rauchgasstrom zu produzieren;
(b-ii) einen ersten Wasser-Gas-Konvertierungsabschnitt, der angeordnet ist, um den ersten reformierten Gasstrom aufzunehmen und einen ersten konvertierten Gasstrom zu produzieren;
(b-iii) eine erste Wassertrenneinheit, die angeordnet ist, um den ersten konvertierten Gasstrom aufzunehmen und einen entwässerten konvertierten Gasstrom und einen ersten Wasserstrom zu produzieren;
(b-iv) eine Wasserstoffreinigungseinheit, die angeordnet ist, um den ersten entwässerten konvertierten Gasstrom aufzunehmen und einen H₂-Produktstrom und einen Endgasstrom zu produzieren;
(c) Zuführen eines Endgas-Ausgangsmaterialstroms, umfassend mindestens einen Teil des Endgasstroms, einer Endgasbehandlungseinheit, umfassend:
(c-i) einen autothermen Reformer oder einen Partialoxidationsreaktor, der angeordnet ist, um den Endgas-Ausgangsmaterialstrom aufzunehmen und einen zweiten reformierten Gasstrom zu produzieren;
(c-ii) einen zweiten Wasser-Gas-Konvertierungsabschnitt, der angeordnet ist, um den zweiten reformierten Gasstrom aufzunehmen und einen zweiten konvertierten Gasstrom zu produzieren;
(c-iii) eine Kohlendioxidtrenneinheit, die angeordnet ist, um den zweiten konvertierten Gasstrom aufzunehmen und einen rohen H₂-Strom und einem ersten kohlendioxidhaltigen Strom zu produzieren;
wobei der Brennstoffstrom mindestens teilweise durch den rohen H₂-Strom bereitgestellt wird;
wobei der H₂-Produktstrom das H₂ für die Hydrobehandlung bereitstellt.

9. Prozess nach Anspruch 8, wobei der Brennstoffstrom durch den rohen H₂-Strom vollständig bereitgestellt wird.

10. Prozess nach Anspruch 8, wobei der Brennstoffstrom durch den Abgasstrom und den rohen H₂-Strom bereitgestellt wird.

11. Prozess nach einem der Ansprüche 8 bis 10, wobei der Endgas-Ausgangsmaterialstrom durch den Endgasstrom und einen zusätzlichen Kohlenwasserstoffstrom bereitgestellt wird.

12. Prozess nach einem der Ansprüche 8 bis 10, wobei der Endgas-Ausgangsmaterialstrom durch den Endgasstrom und den Abgasstrom bereitgestellt wird.

13. Prozess nach einem der Ansprüche 8 bis 10, wobei der Endgas-Ausgangsmaterialstrom durch den Endgasstrom, den Abgasstrom und einen zusätzlichen Kohlenwasserstoffstrom bereitgestellt wird.

14. Verfahren nach einem der Ansprüche 8 bis 13, wobei ein Anteil des rohen H₂-Produktstrom als Brennstoff für befeuerte Heizvorrichtungen verwendet wird, um Prozessströme an anderer Stelle in der Anlage zu erhitzen.

15. Prozess nach einem der Ansprüche 8 bis 14, wobei der Hydrobehandlungs-Ausgangsmaterialstrom biogen ist.

## Revendications

1. Procédé permettant de modifier ultérieurement une installation chimique qui comprend initialement :
(a) une section d'hydrotraitement qui est agencée pour accepter un courant de produit de départ d'hydrotraitement et produire un courant hydrotraité et un courant d'effluent gazeux ;
(b) une section de vaporeformage comprenant :
(b-i) un reformeur à combustion qui est agencé pour accepter un courant de produit de départ hydrocarboné et produire un premier courant de gaz reformé, le reformeur à combustion étant chauffé par la combustion d'un courant de combustible sur un côté enveloppe du reformeur à combustion pour produire un courant de gaz de fumée ;
(b-ii) une première section de conversion eau-gaz qui est agencée pour accepter le premier courant de gaz reformé et produire un premier courant gazeux converti ;
(b-iii) une première unité de séparation d'eau qui est agencée pour accepter le premier courant gazeux converti et produire un premier courant gazeux converti déshydraté et un premier courant d'eau ;
(b-iv) une unité de purification d'hydrogène qui est agencée pour accepter le premier courant gazeux converti déshydraté et produire un courant de produit de H₂ et un courant de gaz résiduaire ;
le procédé comprenant l'étape consistant à installer :
(c) une unité de traitement de gaz résiduaire comprenant :
(c-i) un reformeur autothermique ou un réacteur d'oxydation partielle qui est agencé pour accepter un courant de produit de départ de gaz résiduaire comprenant au moins une partie du courant de gaz résiduaire et produire un second courant de gaz reformé
(c-ii) une seconde section de conversion eau-gaz qui est agencée pour accepter le second courant de gaz reformé et produire un second courant gazeux converti ;
(c-iii) une première unité de séparation de dioxyde de carbone qui est agencée pour accepter le second courant gazeux converti et produire un courant de H₂ brut et un premier courant contenant du dioxyde de carbone ;
dans lequel l'unité de traitement de gaz résiduaire est agencée pour être alimentée au moins en partie par le courant de gaz résiduaire ; et
dans lequel le courant de combustible est fourni au moins en partie par le courant de H₂ brut.

2. Procédé de modification ultérieure selon la revendication 1, dans lequel le procédé comprend l'installation d'une deuxième unité de séparation de dioxyde de carbone en amont de l'unité de traitement de gaz résiduaire qui est agencée pour accepter le courant de gaz résiduaire et produire un deuxième courant contenant du dioxyde de carbone et un courant de gaz résiduaire purifié.

3. Procédé de modification ultérieure selon la revendication 1 ou la revendication 2, dans lequel le procédé comprend l'installation de moyens permettant d'alimenter au moins une portion du courant d'effluent gazeux pour produire le courant de produit de départ de gaz résiduaire.

4. Procédé de modification ultérieure selon l'une quelconque des revendications 1 à 3, dans lequel le procédé comprend l'installation d'une troisième unité de séparation de dioxyde de carbone en amont de l'unité de traitement de gaz résiduaire qui est agencée pour accepter le courant d'effluent gazeux et produire un troisième courant contenant du dioxyde de carbone et un courant d'effluent gazeux purifié.

5. Procédé de modification ultérieure selon l'une quelconque des revendications 1 à 4, dans lequel le procédé comprend l'installation de moyens pour diviser le courant de H₂ brut en un courant de combustible qui est alimenté au reformeur à combustion et un second courant de H₂, un compresseur qui est agencé pour comprimer le second courant de H₂ pour produire un courant de H₂ brut comprimé et des moyens permettant de renvoyer le courant de H₂ brut comprimé en amont de l'unité de purification d'hydrogène.

6. Procédé de modification ultérieure selon la revendication 5, dans lequel le procédé comprend l'installation de moyens permettant de chauffer un ou plusieurs courants de processus dans un ou plusieurs dispositifs de chauffage à combustion par combustion d'au moins une portion du courant de H₂ brut.

7. Installation intégrée d'hydrogène et d'hydrotraitement comprenant :
(a) une section d'hydrotraitement qui est agencée pour accepter un courant de produit de départ d'hydrotraitement et produire un courant hydrotraité et un courant d'effluent gazeux ;
(b) une section de vaporeformage comprenant :
(b-i) un reformeur à combustion qui est agencé pour accepter un courant de produit de départ hydrocarboné et produire un premier courant de gaz reformé, le reformeur à combustion étant chauffé par la combustion d'un courant de combustible sur un côté enveloppe du reformeur à combustion pour produire un courant de gaz de fumée ;
(b-ii) une première section de conversion eau-gaz qui est agencée pour accepter le premier courant de gaz reformé et produire un premier courant gazeux converti ;
(b-iii) une première unité de séparation d'eau qui est agencée pour accepter le premier courant gazeux converti et produire un premier courant gazeux converti déshydraté et un premier courant d'eau ;
(b-iv) une unité de purification d'hydrogène qui est agencée pour accepter le premier courant gazeux converti déshydraté et produire un courant de produit de H₂ et un courant de gaz résiduaire ;
(c) une unité de traitement de gaz résiduaire comprenant :
(c-i) un reformeur autothermique ou un réacteur d'oxydation partielle qui est agencé pour accepter un courant de produit de départ de gaz résiduaire comprenant au moins une partie du courant de gaz résiduaire et produire un second courant de gaz reformé
(c-ii) une seconde section de conversion eau-gaz qui est agencée pour accepter le second courant de gaz reformé et produire un second courant gazeux converti ;
(c-iii) une unité de séparation de dioxyde de carbone qui est agencée pour accepter le second courant gazeux converti et produire un courant de H₂ brut et un premier courant contenant du dioxyde de carbone ;
dans laquelle l'unité de traitement de gaz résiduaire est agencée pour être alimentée au moins en partie par le courant de gaz résiduaire ; et
dans laquelle le courant de combustible est fourni au moins en partie par le courant de H₂ brut.

8. Processus intégré permettant de produire de l'hydrogène et de réaliser un hydrotraitement, comprenant les étapes consistant à :
(a) réaliser un hydrotraitement d'un courant de produit de départ d'hydrotraitement dans une section d'hydrotraitement pour produire un courant hydrotraité et un courant d'effluent gazeux ;
(b) réaliser un vaporeformage dans une section de vaporeformage comprenant :
(b-i) un reformeur à combustion qui est agencé pour accepter un courant de produit de départ hydrocarboné et produire un premier courant de gaz reformé, le reformeur à combustion étant chauffé par la combustion d'un courant de combustible sur un côté enveloppe du reformeur à combustion pour produire un courant de gaz de fumée ;
(b-ii) une première section de conversion eau-gaz qui est agencée pour accepter le premier courant de gaz reformé et produire un premier courant gazeux converti ;
(b-iii) une première unité de séparation d'eau qui est agencée pour accepter le premier courant gazeux converti et produire un courant gazeux converti déshydraté et un premier courant d'eau ;
(b-iv) une unité de purification d'hydrogène qui est agencée pour accepter le premier courant gazeux converti déshydraté et produire un courant de produit de H₂ et un courant de gaz résiduaire ;
(c) alimenter un courant de produit de départ de gaz résiduaire comprenant au moins une partie du courant de gaz résiduaire à une unité de traitement de gaz résiduaire comprenant :
(c-i) un reformeur autothermique ou un réacteur d'oxydation partielle qui est agencé pour accepter le courant de produit de départ de gaz résiduaire et produire un second courant de gaz reformé ;
(c-ii) une seconde section de conversion eau-gaz qui est agencée pour accepter le second courant de gaz reformé et produire un second courant gazeux converti ;
(c-iii) une unité de séparation de dioxyde de carbone qui est agencée pour accepter le second courant gazeux converti et produire un courant de H₂ brut et un premier courant contenant du dioxyde de carbone ;
dans laquelle le courant de combustible est fourni au moins en partie par le courant de H₂ brut ;
dans laquelle le courant de produit de H₂ fournit le H₂ pour l'hydrotraitement.

9. Processus selon la revendication 8, dans lequel le courant de combustible est fourni entièrement par le courant de H₂ brut.

10. Processus selon la revendication 8, dans lequel le courant de combustible est fourni par le courant d'effluent gazeux et le courant de H₂ brut.

11. Processus selon l'une quelconque des revendications 8 à 10, dans lequel le courant de produit de départ de gaz résiduaire est fourni par le courant de gaz résiduaire et un courant d'hydrocarbures de composition.

12. Processus selon l'une quelconque des revendications 8 à 10, dans lequel le courant de produit de départ de gaz résiduaire est fourni par le courant de gaz résiduaire et le courant d'effluent gazeux.

13. Processus selon l'une quelconque des revendications 8 à 10, dans lequel le courant de produit de départ de gaz résiduaire est fourni par le courant de gaz résiduaire, le courant d'effluent gazeux et un courant d'hydrocarbures de composition.

14. Processus selon l'une quelconque des revendications 8 à 13, dans lequel une portion du courant de produit de H₂ brut est utilisée en tant que combustible pour des dispositifs de chauffage à combustion pour chauffer des courants de processus ailleurs sur l'installation.

15. Processus selon l'une quelconque des revendications 8 à 14, dans lequel le courant de produit de départ d'hydrotraitement est biogénique.
